# EUROPÄISCHE PATENTSCHRIFT

(11) **EP 1 445 484 B1**
(45) Veröffentlichungstag und Bekanntmachung des Hinweises auf die Patenterteilung: **01.10.2008**
(21) Anmeldenummer: 04002498.6
(22) Anmeldetag: 05.02.2004
(51) Int. Cl.: F03D 11/02, F16D 7/02

(54) **Überlastkupplung, insbesondere für Generatorläufer von Windkraftanlagen**
Overload friction clutch, particularly for a wind turbine transmission.
Limiteur de couple à friction, notamment pour éolienne

(30) Priorität: 08.02.2003 DE 10305244
(43) Veröffentlichungstag der Anmeldung: 11.08.2004
(73) Patentinhaber: Renk Aktiengesellschaft, 86159 Augsburg (DE)
(72) Erfinder: Pinnekamp, Burkhard, Dr., 86199 Augsburg (DE); Boiger, Peter, 86199 Augsburg (DE); Weiss, Toni, Dr., 81241 München (DE); Arndt, Joachim, 24768 Rendsburg (DE)
(74) Vertreter: Schlotter, Alexander Carolus Paul

(56) Entgegenhaltungen:
- WO-A-83/01657
- FR-A- 2 554 534
- GB-A- 376 017
- GB-A- 2 220 046
- US-A- 5 020 650

## Beschreibung

Die Erfindung betrifft eine Überlastkupplung für Arbeitsmaschinen, insbesondere für Generatorläufer von Windkraftanlagen gemäß Patentanspruch 1.

Es ist allgemein bekannt, Reibuhgskuppiungen als Überlastkupplungen einzusetzen, deren Kupplungskraft bzw. Kupplungsmoment durch eine vorbestimmte Vorspannung fest eingestellt wird. Bei Erreichen des Grenzmomentes setzt zwischen den kraftübertragenden Kupplungstellen eine Relativbewegung ein - die Kupplung "rutscht" - und das übertragbare Drehmoment sinkt ab. Durch diese DrehmomentBegrenzung können Maschinen vor Überlast und Beschädigungen geschützt werden.

Aus der US 5,020,650 ist eine Überlastkupplung, mit einer Antriebsscheibe bekannt, welche mit einer Antriebswelle der Arbeitsmaschine verbunden ist. Diese Antriebsscheibe ist reibschlüssig zwischen zwei Reibscheiben geklemmt, welche mit einer Antriebswelle der Antriebmaschine verbunden sind. Zur Zentrierung der Reibscheiben bezüglich der Antriebsscheibe ist ein Radiallager vorgesehen. Die Klemmkraft wird bei dieser Kupplung von vorgespannten Federeinrichtungen aufgebracht.

Aufgabe der Erfindung ist es eine einfach aufgebaute Überlastkupplung zu schaffen, deren Grenzmoment einfach und exakt eingestellt werden kann.

Diese Aufgabe wird erfindungsgemäß durch die Merkmale des Patentanspruchs 1 gelöst.

Durch die Verwendung von sehr langen Dehnschrauben mit hoher Schraubenlängung kann in vorteilhafter Welse ein großer Verschleißbetrag kompensiert werden, so dass das Grenzmoment der Kupplung über eine lange Betribsdauer konstant bleibt.
Durch Spannscheiben als zusätzliche Federelemente kann die Konstanz des Rutschmomentes weiter verbessert werden.

Durch eine einfache Spanneinrichtung zum Vorspannen können die Dehnschrauben als einfache und günstige Normteile ausgeführt werden.
Das Rutschmoment einer erfindungsgemäßen Überlastkupplung lässt sich in einfacher Weise durch Verändern der Vorspannung verstellen, ohne dass die Konstruktion verändert werden muss.
Durch den zangenförmigen Aufbau können mit der erfindungsgemäßen Überlastkupplung Radialkräfte und Kippmomente ohne Einfluss auf das Auslösemoment übertragen werden.
Durch den vorteilhaften Aufbau genügt bei der erfindungsgemäßen Überlastkupplung ein Radiallager zur Zentrierung und Führung der Kupplungsteile beim Rutschen.
Die erfindungsgemäße Überlastkupplung ist in vorteilhafter Weise in die Antriebsnabe einer Arbeitsmaschine integriert und übernimmt neben der Schutzfunktion vor Überlast auch Lagerungsaufgaben für die Arbeitsmaschine.

Weitere Merkmale und Vorteile ergeben sich aus den Unteransprüchen in Verbindung mit der Beschreibung.

Nachfolgend werden die Merkmale der vorliegenden Erfindung anhand bevorzugter Ausführungsformen näher erläutert. In den zugehörigen schematischen Zeichnungen zeigt, die
- Fig. 1: einen Halbschnitt durch eine erfindungsgemäße Überlastkupplung und in
- Fig. 2: ist anhand eines Ausschnitts X aus Fig. 1 die Vorspannung der Dehnschrauben dargestellt.

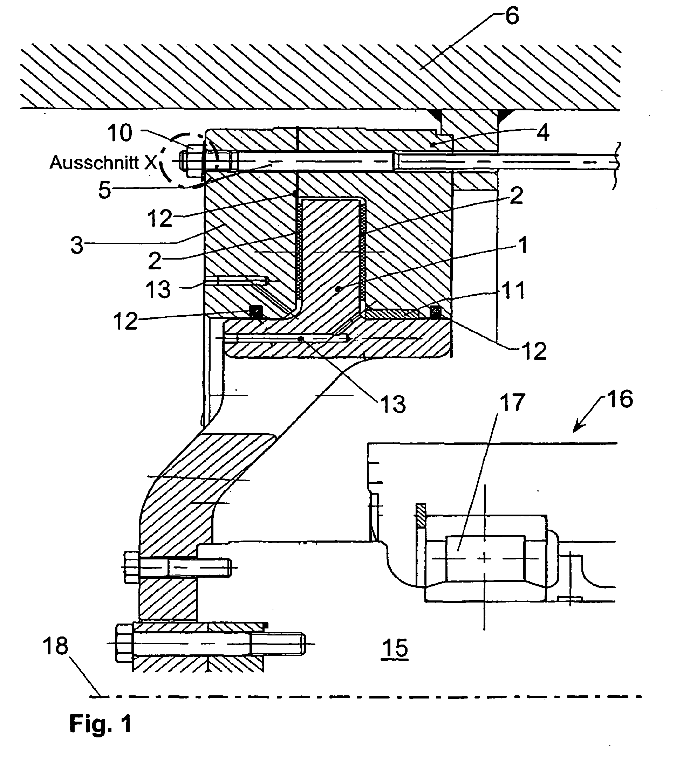

Die Fig. 1 stellt die erfindungsgemäße Überlastkupplung am Beispiel einer Windkraftanlage dar, deren Rotorblätter eine Antriebswelle 6 direkt oder über ein zwischengeschaltetes Getriebe antreiben. Die Antriebswelle 6 ist als Hohlwelle ausgeführt und weist mehrere nach innen kragende Absätze oder einen innen umlaufenden Flansch auf, an welchem eine erste Reibscheibe 4 angeordnet ist. Die erste Reibscheibe 4 ist an einem Absatz durch mehrere gleichmäßig am Umfang verteilt angeordnete Dehnschrauben 5 mit einer weiteren Reibscheibe 3 zusammen gespannt, wobei im Zwischenraum zwischen den Reibscheiben 3 und 4 eine Antriebsscheibe 1 geklemmt wird. Die Reibscheiben 3, 4 sind vorzugsweise aus Stahl und weisen zwischen einander einen Spalt von beispielsweise etwa einem Millimeter auf. Die Drehmomentübertragung zwischen den Reibscheiben 3, 4 erfolgt vorzugsweise formschlüssig. Die Antriebsscheibe 1 kann mit Reibsegmenten 2 versehen sein, welche als Stahlplatten mit einem Streusinterbelag gleichmäßig am Umfang verteilt angeordnet sind. Die Anordnung bestehend aus Antriebswelle 6, Reibscheiben 3, 4 und Antriebsscheibe 1 drehen sich um eine gemeinsame Drehachse 18. Die Antriebsscheibe 1 ist mit dem Generatorläufer 15 verbunden und treibt diesen im Generator 16 an.
Der Kern der vorliegenden Erfindung ist darin zu sehen, dass eine Überlastkupplung in eine Antriebsnabe einer Kraftmaschine, insbesondere eines Generators einer Windkraftanlage, integriert ist und den Generator einerseits durch die Drehmomentbegrenzung vor Überlast schützt und andererseits durch die Aufnahme von Kippmomenten auch eine Lagerungsfunktion übernimmt. Durch diese vorteilhafte Kombination kann an der Arbeitsmaschine eine Lagerung eingespart werden und insbesondere permanent erregte Generatoren können in Verbindung mit der erfindungsgemäßen Überlastkupplung fliegend gelagert werden.
An dem gezeigten Ausführungsbeispiel ist für den Generatorläufer 15 in Verbindung mit der erfindungsgemäßen Überlastkupplung nur ein Radiallager 17 erforderlich. Die Axialkräfte sowie das Kippmoment des Läufers werden durch die Klemmkraft der Dehnschrauben 5 aufgenommen.
Die Antriebsnabe wird durch die Reibscheiben 3, 4 gebildet, welche die Antriebsscheibe 1 kraftschlüssig aufnehmen. Das Grenzdrehmoment wird durch das Maß der Vorspannung an den Dehnschrauben 5 festgelegt. Vorzugsweise werden extrem lange und möglichst dünne Dehnschrauben 5 vorgesehen, die gleichmäßig am Umfang verteilt angeordnet werden. Durch die hohe Vorspannungslängung der Dehnschrauben 5 nimmt die Vorspannung bei Verschleiß der Kupplung nur minimal ab und das Grenzdrehmoment bleibt über eine lange Betriebsdauer konstant. Das Grenzdrehmoment, um z.B. bei Kurzschluss ein definiertes Durchrutschen der Kupplung zu ermöglichen, lässt sich in einfacher Weise durch Veränderung der Vorspannung einstellen, ohne die Konstruktion ändern zu müssen.
Durch die zangenförmige Umschließung der Antriebsscheibe 1 wird zwischen den Reibscheiben 3, 4 ein Kupplungsraum gebildet, der mittels Dichtungen 12 nach Außen hin abgedichtet ist. Der Kupplungsraum wird vorzugsweise mit Schmierfett gefüllt. Zum Austausch der Füllung sind an der einen Reibscheibe 3 sowie an der Antriebsscheibe 1 Bohrungen 13 vorgesehen. Die Fettschmierung trägt ebenfalls dazu bei, dass das Reibmoment dauerhaft konstant bleibt. Da nur geringe Winkelbewegungen (max. 360 Winkelgrade) auftreten und ausreichende Abkühlphasen auftreten ist die Fettfüllung ausreichend. Für höhere thermische Beanspruchungen müssen andere Vorsehungen getroffen werden.
Wenn das Grenzmoment erreicht wird und sich die Kupplungsteile relativ zueinander bewegen, d.h. die Kupplung anfängt zu rutschen, wird die Antriebsscheibe 1 durch das einseitige Radiallager 11 an der Reibscheibe 4 geführt. Das Radiallager 11 hat nur geringes Spiel und dient auch zur radialen Zentrierung der Antriebsscheibe 1 innerhalb der Reibscheibe 4.

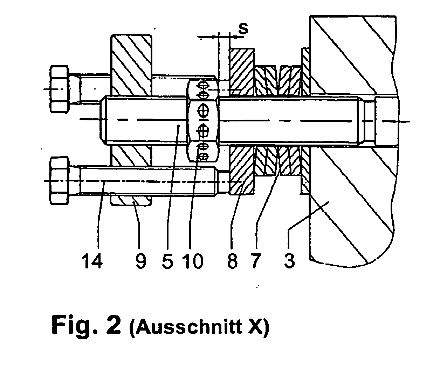

Die Fig. 2 stellt den Ausschnitt X aus Fig. 1 dar. Zur Vorspannung der Dehnschrauben 5 wird am Ende der entsprechenden Dehnschraube 5 eine Platte 9 befestigt, beispielsweise mittels Gewinde aufgeschraubt. An der Platte 9 sind gleichmäßig am Umfang verteilt mehrere Gewindebohrungen vorgesehen, in welche Schrauben 14 eingebracht sind. Zwischen der Mutter 10 und der Reibscheibe 3 sind bei dieser beispielhaften Ausführung noch eine Platte 8 sowie federnde Spannscheiben 7 vorgesehen. Durch die Spannscheiben 7 kann die Vorspannkraft der Dehnschrauben 5 unterstützt werden. Zum Vorspannen der Dehnschrauben 5 werden die Schrauben 14 in die Platte 9 eingeschraubt, so dass sie zunächst an der Platte 8 anliegen. Durch weiteres Einschrauben werden die Dehnschrauben 5 gelängt und die Spannscheiben 7 gestaucht. Die elastische Stauchung der Spannscheiben 7 sowie die elastische Dehnung der Dehnschrauben 5 ergeben zusammen die Vorspannkraft. Die Länge s ergibt sich aus dem Betrag der Stauchung der Spannscheiben 7 und dem Betrag der Längung der Dehnschrauben 5.
Die Länge s bestimmt die Vorspannkraft der Überlastkupplung und wird vorzugsweise aus Vorversuchen ermittelt. Sobald der vorgesehene Betrag der Länge s erreicht ist, wird die Mutter 10 der Dehnschraube 5 handfest an die Platte 8 angelegt. Die Schrauben 14 werden zurückgedreht und die Platte 9 kann entfernt werden.
Die Vorspannung der Dehnschrauben 5 kann selbstverständlich auch ohne Spannscheiben 7 und Platte 8 direkt gegen die Reibscheibe 3 vorgenommen werden.

### Bezugszeichenliste

- 1: Antriebsscheibe
- 2: Reibsegment
- 3: Reibscheibe
- 4: Reibscheibe
- 5: Dehnschraube
- 6: Antriebswelle
- 7: Spannscheiben
- 8: Platte
- 9: Platte
- 10: Mutter
- 11: Radiallager
- 12: Dichtung
- 13: Bohrung
- 14: Schraube
- 15: Generatorläufer
- 16: Generator
- 17: Lager
- 18: Drehachse
- s: Längung

## Patentansprüche

1. Überlastkupplung für Arbeitsmaschinen, insbesondere für Generatorläufer von Windkraftanlagen, mit einer Antriebsscheibe (1),
welche mit einer Antriebswelle (15) der Arbeitsmaschine verbunden ist und
reibschlüssig zwischen zwei Reibscheiben (3, 4) geklemmt ist, welche mit einer Antriebswelle (6) der Antriebmaschine verbunden sind; wobei
**für die Antriebswelle (15) der Arbeitsmaschine nur ein Radiallager (17)** zur Zentrierung der Reibscheiben (3, 4) bezüglich der Antriebsscheibe (1) vorgesehen ist
**dadurch gekennzeichnet, dass**
zur Erzeugung der Klemmkraft vorgespannte Dehnschrauben (5) vorgesehen sind und
das Kippmoment der Antriebswelle (15) der Arbeitsmaschine durch die Klemmkraft der Dehnschrauben (5) aufnehmbar ist.

2. Überlastkupplung nach Anspruch 1, **dadurch gekennzeichnet, dass** zwischen den Muttern (10) der Dehnschrauben (5) und der Reibscheibe (3) Spannscheiben (7) als zusätzliche Federelemente vorgesehen sind.

3. Überlastkupplung nach Anspruch 1 oder 2, **dadurch gekennzeichnet, dass** an der Antriebsscheibe (1) Reibsegmente (2) vorgesehen sind, welche in Form von einzelnen Stahlplatten - die mit einem Streusinterbelag versehen sind - gleichmäßig am Umfang verteilt angeordnet sind.

4. Überlastkupplung nach einem der vorangehenden Ansprüche, **dadurch gekennzeichnet, dass** als Radiallager (11) ein Gleitlager aus Bronze oder Weißmetall vorgesehen ist.

5. Überlastkupplung nach einem der vorangehenden Ansprüche, **dadurch gekennzeichnet, dass** die Reibscheiben (3, 4) die Antriebsscheibe (1) zangenförmig umschließen und Dichtungen (12) vorgesehen sind, welche den so gebildeten Kupplungsraum nach außen abschließen und eine Füllung mit Schmierfett vorgesehen ist, welche mittels Bohrungen (13) ausgetauscht werden kann.

## Claims

1. Overload clutch for working machines, particularly for rotors of electric generators of wind turbines, having a drive disk (1) connected to a drive shaft (15) of the working machine and frictionally clamped between two friction disks (3, 4) which are connected to a drive shaft (6) of the drive machine; whereas for the drive shaft of the working machine only one a radial bearing (17) is provided for centering the friction disks (3, 4) relative to the drive disk,
**characterised in that**
biased expansion bolts (5) are provided to generate the clamping force and that the moment of tilt at the drive shaft (15) of the working machine is absorbable by the clamping force of the expansion bolts (5).

2. Overload clutch according to claim 1, **characterized in that** between the nuts (10) of the expansion bolts (5) and the friction disk (3), spring washers (7) are provided as additional spring elements.

3. Overload clutch according to claim 1 or 2, **characterized in that** at the drive disk (1) friction segments (2) are provided, which in form of individual steel plates - provided with a scatter-sinter surface - are arranged evenly distributed at the circumference.

4. Overload clutch according to one of the preceding claims, **characterized in that** as radial bearing (11) a bush bearing made up of bronze or white alloy is provided.

5. Overload clutch according to one of the preceding claims, **characterized in that** the friction disks (3, 4) pincer-like enclose the drive disk (1) and seals (12) are provided for closing the thus formed clutch chamber to the outside and a filling with lubrication grease is provided, which can be exchanged by means of drillings (13).

## Revendications

1. Accouplement limiteur de couple pour machines de travail, notamment pour rotor de générateurs d'éoliennes, comprenant un disque d'entraînement (1),
qui est relié à un arbre d'entraînement (15) de la machine de travail, et
est enserré par adhérence entre deux disques de friction (3, 4) qui sont reliés à un arbre d'entraînement (6) de la machine d'entraînement,
un seul palier radial (17) étant prévu pour l'arbre d'entraînement (15) de la machine de travail en vue du centrage des disques de friction (3, 4) par rapport au disque d'entraînement (1),
**caractérisé**
**en ce que** pour produire la force de serrage sont prévues des vis de dilatation (5) précontraintes, et
**en ce que** le moment de basculement de l'arbre d'entraînement (15) de la machine de travail peut être absorbé par la force de serrage des vis de dilatation (5) .

2. Accouplement limiteur de couple selon la revendication 1, **caractérisé en ce qu'**entre les écrous (10) des vis de dilatation (5) et le disque de friction (3) sont prévues des rondelles de serrage (7) en tant qu'éléments de ressort supplémentaires.

3. Accouplement limiteur de couple selon la revendication 1 ou 2, **caractérisé en ce que** sur le disque d'entraînement (1) sont prévus des segments de friction (2) qui, sous la forme de plaques d'acier individuelles pourvues d'un revêtement de poudre de frittage, sont agencés de manière uniformément répartie sur la périphérie.

4. Accouplement limiteur de couple selon l'une des revendications précédentes, **caractérisé en ce qu'**en guise de palier radial (11) il est prévu un palier lisse en bronze ou en métal antifriction.

5. Accouplement limiteur de couple selon l'une des revendications précédentes, **caractérisé en ce que** les disques de friction (3, 4) enserrent en forme de pince le disque d'entraînement (1), **en ce que** sont prévus des joints d'étanchéité (12) qui ferment l'espace d'accouplement ainsi créé par rapport à l'extérieur, et **en ce qu'**il est prévu un remplissage de graisse de lubrification, qui peut être remplacé par l'intermédiaire de perçages d'accès (13).
